# EUROPÄISCHE PATENTSCHRIFT

(11) **EP 1 875 056 B1**
(45) Veröffentlichungstag und Bekanntmachung des Hinweises auf die Patenterteilung: **21.12.2011**
(21) Anmeldenummer: 06724255.2
(22) Anmeldetag: 12.04.2006
(51) Int. Cl.: F02B 29/04

(54) **LADERMODUL FÜR EINE VERBRENNUNGSKRAFTMASCHINE**
CHARGER MODULE FOR AN INTERNAL COMBUSTION ENGINE
MODULE DE SURALIMENTATION POUR MOTEUR A COMBUSTION INTERNE

(30) Priorität: 19.04.2005 DE 102005017970
(43) Veröffentlichungstag der Anmeldung: 09.01.2008
(73) Patentinhaber: AUDI AG, 85045 Ingolstadt (DE)
(72) Erfinder: DÖRING, Ralf, 85049 Gerolfing (DE); RIEGNER, Joerg, 02747 Strahwald (DE); KAULBACH, Jens-Uwe, 85101 Lenting (DE); HOLLMIG, Ralph, 85049 Ingolstadt (DE)
(86) Internationale Anmeldenummer: PCT/EP2006/003341
(87) Internationale Veröffentlichungsnummer: WO 2006/111307

(56) Entgegenhaltungen:
- EP-A- 1 433 936
- DE-A1- 10 336 194
- US-A- 6 029 637

## Beschreibung

Die Erfindung betrifft ein Ladermodul gemäß dem Oberbegriff des Anspruchs 1 sowie eine Verbrennungskraftmaschine gemäß dem Oberbegriff des Anspruchs 18.

In der am Anmeldetag der vorliegenden Patentanmeldung noch unveröffentlichten Deutschen Patentanmeldung DE 102004049027.9 vom 8.10.04 der Anmelderin ist bereits ein Ladermodul der eingangs genannten Art für eine Verbrennungskraftmaschine in V-Bauweise beschrieben, bei dem sich die beiden links und rechts des Laders angeordneten Ladeluftkühler zur Versteifung des Moduls und damit zur Verringerung der Störanfälligkeit infolge von betriebsbedingten Vibrationen auf zwei zeitlich über ein Gehäuse des Laders überstehenden Befestigungsplatten abstützen. Die Ladeluftkühler werden dort von einem als Luftverteiler ausgebildeten Deckel festgehalten, der durch die Gehäuse der Ladeluftkühler hindurch mit den Befestigungsplatten verschraubt ist. Ein weiteres Beispiel eines Luft-wärmelaunscher der Stand detechide wird durch das Dokument EP-1433936 gegeben.

Um den Ladeluttkühlern eine zum Einspannen zwischen der Befestigungsplatte und dem Luftverteilerdeckel ausreichende Stabilität zu verleihen und an ihrer Ober- und Unterseite für eine luftdichte Verbindung zur Befestigungsplatte bzw. zum Luftverteilerdeckel zu sorgen, müssen die Ladeluftkühler ein stabiles Gussgehäuse mit einem ebenen Dichtungsflansch an der Ober- und Unterseite aufweisen, was bei der Herstellung im Vergleich zu einem in Leichtbauweise aus Metallblech hergestellten Ladeluftkühler nicht unerhebliche Zusatzkosten verursacht.

Ausgehend hiervon liegt der Erfindung die Aufgabe zugrunde, bei einem Ladermodul der eingangs genannten Art die Herstellungskosten zu senken, ohne die Steifigkeit oder Strukturfestigkeit des Ladermoduls zu beeinträchtigen.

Diese Aufgabe wird erfindungsgemäß dadurch gelöst, dass der Lader und die beiden Ladeluftkühler in ein gemeinsames Gehäuse eingesetzt sind, das den Lader und die beiden Ladeluftkühler mindestens an der Unterseite und an zwei entgegengesetzten Seiten umgibt. Durch die Verwendung eines stabilen gemeinsamen Gehäuses für den Lader und die beiden Ladeluftkühler können die beiden Ladeluftkühler in Leichtbauweise aus Metallblech hergestellt und in das Gehäuse eingesetzt werden, wodurch sich nicht nur die Herstellungskosten des gesamten Ladermoduls senken lassen sondern auch die Wärmeübertragung von der Ladeluft auf das Kühlwasser verbessert werden kann. Darüber hinaus verleiht das gemeinsame Gehäuse dem Ladermodul eine verhältnismäßig hohe Stabilität und Steifigkeit, wodurch eine vibrationsarme Anbindung an die Verbrennungskraftmaschine ermöglicht und damit durch Verminderung der vibrationsbedingten Geräuschentwicklung die Akustik verbessert wird.

Da das Gehäuse wegen der Anzahl der darin untergebrachten Komponenten eine relativ komplizierte Form mit einer Reihe von Öffnungen in verschiedenen Seiten aufweisen muss, wird es vorzugsweise im Sandgussverfahren aus Leichtmetall hergestellt.

Gemäß einer bevorzugten Ausgestaltung der Erfindung wird das Ladermodul bei Verbrennungskraftmaschinen in V-Bauweise eingesetzt, die einen Motorblock, zwei Reihen von V-förmig im Motorblock angeordneten Zylindern und zwei oberhalb der Zylinderreihen am Motorblock befestigte Zylinderköpfe aufweisen, wobei das Ladermodul einen Zwischenraum zwischen den Zylinderköpfen der beiden Zylinderreihen überbrückt. Bei dieser Anordnung sorgt die Verbindung des Ladermoduls mit den beiden Zylinderköpfen und die dadurch ermöglichte doppelte Anbindung des Ladermoduls an den Motorblock für eine besonders vibrationsarme Konstruktion.

Zweckmäßig ist der Lader im Ladermodul in der Mitte zwischen den beiden Ladeluftkühlern angeordnet, wobei die vom Lader verdichtete Ladeluft einen an der Oberseite des Ladermoduls zwischen dem Lader und den Ladeluftkühlern angeordneten und vorzugsweise ebenfalls in das Gehäuse des Ladermoduls integrierten Luftverteiler zu den beiden Ladeluftkühlern und von dort nach unten durch den jeweiligen Zylinderkopf in die Zylinder strömt, womit das Ansprechverhalten durch die extrem kurzen Luftwege zwischen dem Lader und den Zylinderköpfen deutlich verbessert werden kann.

Eine besonders hohe Stabilität der Anbindung und besonders kurze Luftwege werden auch dadurch erreicht, dass sich das Gehäuse des Ladermoduls unterhalb der beiden Ladeluftkühler direkt mit seiner Unterseite auf den beiden Zylinderköpfen abstützt und an diesen bzw. an Klappenflanschen auf den Zylinderköpfen festgeschraubt ist, wobei eine Mehrzahl von Luftaustrittsöffnungen an der Unterseite des Gehäuses unmittelbar in entsprechende, zu den Zylindern führende Luftkanäle in den Zylinderköpfen bzw. Klappenflanschen mündet.

Die Anordnung des Laders in der Mitte zwischen den beiden Ladeluftkühlern erleichtert auch den Antrieb des Laders mittels der Kurbelwelle der Verbrennungskraftmaschine, die vorzugsweise über einen Riementrieb mit einer über eine Stirnseite des Gehäuses überstehenden Antriebswelle des Laders verbunden ist.

Neben dem Lader und den beiden Ladeluftkühlern kann das Gehäuse zweckmäßig auch einen Bypass zur Teillastregelung umfassen, durch den ein Teil der vom Lader angesaugten Luft zu einem Lufteinlass des Laders zurückgeleitet werden und im Kreislauf durch den Lader geführt kann. Der Bypass ist vorzugsweise oberhalb des Laders an der Oberseite des Gehäuses angeordnet, wodurch der Luftweg durch den Bypass ebenfalls kurz gehalten werden kann.

Zur Montage des Laders und der beiden Ladeluftkühler im Gehäuse wird dieses vorzugsweise mit Öffnungen versehen, durch welche der Lader und die beiden Ladeluftkühler in das Gehäuse eingeführt oder eingesetzt werden können. Die Öffnung zum Einsetzen des Laders ist zweckmäßig an einer der beiden Stirnseiten des Gehäuses angeordnet, vorzugsweise an derjenigen Stirnseite die zu einer Ladelufteinlassöffnung des Laders entgegengesetzt ist.

Demgegenüber können die beiden Ladeluftkühler gemäß einer ersten Alternative von oben her in das Gehäuse eingesetzt werden, das in diesem Fall an seiner Oberseite zweckmäßig mit mindestens einer Öffnung versehen ist. Die Öffnung wird nach dem Einsetzen des jeweiligen Ladeluftkühlers verschlossen, wozu gemäß einer bevorzugten Ausgestaltung der Erfindung ein einziger Schraubdeckel vorgesehen ist, der sich über die gesamte Breite des Gehäuses erstreckt und den Luftverteiler bildet, der die im Lader verdichtete Luft auf die beiden Ladeluftkühler verteilt.

Gemäß einer zweiten bevorzugten Alternative werden die beiden Ladeluftkühler jeweils durch eine stirnseitige Öffnung in das Gehäuse eingeschoben. Diese Alternative macht eine Anbringung von Kühlwasseranschlüssen am Gehäuse des Ladermoduls entbehrlich, da die Kühlwasseranschlüsse an dem zur Einführöffnung benachbarten Stirnende des Ladeluftkühlers selbst angebracht werden können, so dass sie außerhalb des Gehäuses liegen, nachdem der Ladeluftkühler vollständig in die Einführöffnung eingeschoben worden ist. In diesem letzteren Fall ist das Gehäuse an seiner Oberseite vorzugsweise durch einen als Einheit mit einem Boden und Seitenwänden des Gehäuses ausgebildeten Deckel verschlossen, der beim Gießen zusammen mit dem Rest des Gehäuses geformt wird und zweckmäßig ebenfalls im Inneren als Luftverteiler ausgebildet ist.

Im folgenden wird die Erfindung anhand zweier in der Zeichnung dargestellter Ausführungsbeispiele näher erläutert. Es zeigen:
Fig. 1: eine perspektivische Oberseitenansicht eines Ladermoduls für einen Verbrennungskraftmaschine in V-Bauweise mit einem mechanischen Lader, zwei Ladeluftkühlern und einem aufgeschraubten Luftverteilerdeckel;
Fig. 2: eine etwas vergrößerte Ansicht entsprechend Fig. 1, jedoch mit abgenommenem Luftverteilerdeckel;
Fig. 3: eine perspektivische Oberseitenansicht des Ladermoduls aus einer anderen Blickrichtung;
Fig. 4: eine perspektivische Oberseitenansicht eines modifizierten Ladermoduls mit einem als integraler Teil des Gehäuses ausgebildeten Luftverteilerdeckel, jedoch ohne den Lader;
Fig. 5: eine Oberseitenansicht des Ladermoduls aus Fig. 4, jedoch mit teilweise weggeschnittenem Luftverteilerdeckel.

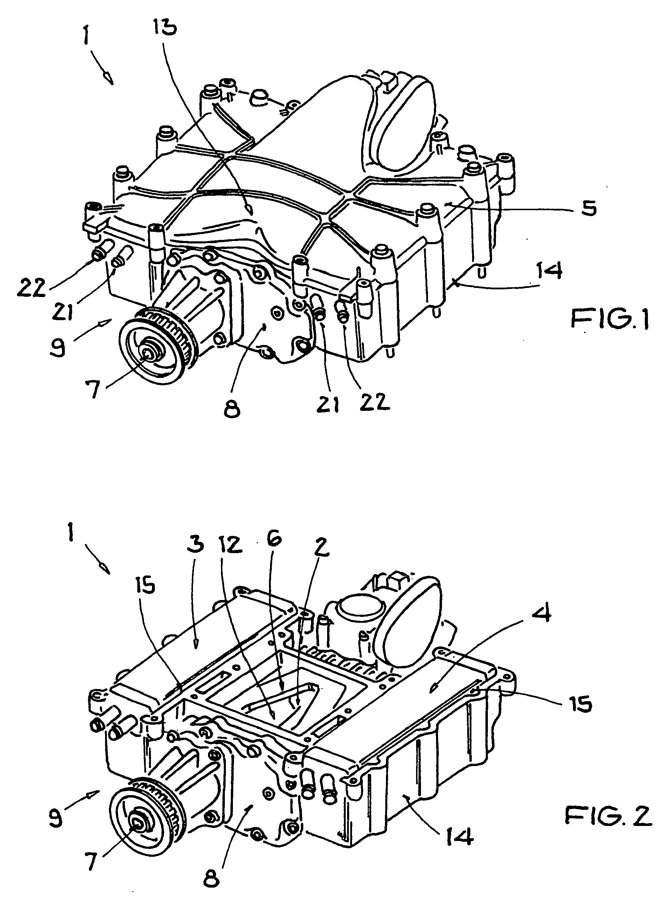

Wie sich am besten aus Fig. 2 entnehmen lässt, besteht das in der Zeichnung dargestellte Ladermodul 1 für eine als 6-Zylinder-V-Motor ausgebildete Verbrennungskraftmaschine (nicht dargestellt) im Wesentlichen aus einem mechanischen Lader 2 und zwei beiderseits des Laders 2 angeordneten Ladeluftkühlern 3, 4, die in einem gemeinsamen Gehäuse 5 untergebracht sind.

Bei dem mechanischen Lader 2 handelt es sich um einen nach dem Verdrängungsprinzip arbeitenden Verdichter mit oder ohne innere Verdichtung, der entweder als Roots-Verdichter oder als Schraubenverdichter vom Typ Lysholm ausgebildet sein kann.

Der Lader 2 umfasst zwei Drehkolben oder Rotoren (nicht dargestellt) mit parallelen Drehachsen, die nebeneinander in einem vom Gehäuse 5 umschlossenen Hohlraum 6 angeordnet sind.

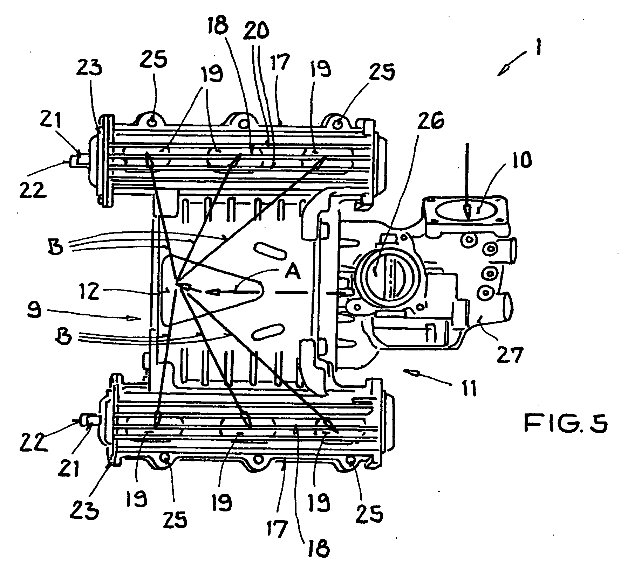

Die Drehkolben oder Rotoren sind über ein Gleichlaufgetriebe (nicht sichtbar) mit einer Verdichterantriebswelle 7 verbunden, die über einen Verschlussdeckel 8 an einem vorderen Stirnende 9 des Gehäuses 5 übersteht und mittels eines Treibriemens (nicht dargestellt) von der Kurbelwelle der Verbrennungskraftmaschine angetrieben wird. Durch den Antrieb des Laders 2 wird Ladeluft durch eine über eine Drosselklappe mit einem Luftfilter und einem Ansaugrohr (nicht dargestellt) der Verbrennungskraftmaschine verbundene Luftansaugöffnung 10 am hinteren Stirnende 11 des Gehäuses 5 in den Lader 2 angesaugt, aus dem sie nach dem Hindurchtritt zwischen den Drehkolben oder Rotoren und einer Begrenzungswand des Hohlraums 6 durch eine an dessen Oberseite angeordnete Luftausstoßöffnung 12 wieder ausgestoßen wird, wie am besten in Fig. 5 dargestellt. Oberhalb der Luftausstoßöffnung 12 befindet sich ein Luftverteiler 13, der den aus der Luftausstoßöffnung 12 austretenden Luftstrom A in Teilströme B aufteilt und diese innerhalb des Gehäuses 5 gleichmäßig nach beiden Seiten zu den Ladeluftkühlern 3, 4 weiter leitet.

Bei dem in den Figuren 1 bis 3 dargestellten Ladermodul 2 ist das Gehäuse 5 zweiteilig ausgebildet, wobei es im Wesentlichen aus einem den Lader 2 und die beiden Ladeluftkühler 3, 4 aufnehmenden Unterteil 14 und einem den Luftverteiler 13 bildenden Schraubdeckel besteht, die beide im Sandgussverfahren aus Aluminium hergestellt sind.

Das Unterteil 14 des Gehäuses 5 weist an seiner vorderen Stirnseite 9 eine Einführöffnung zum Einsetzen des Laders 2 auf, die nach dem Einsetzen vom Verschlussdeckel 8 verschlossen wird. Das Unterteil 14 weist weiter zwei nach oben offene Ausnehmungen 15 auf, in welche die beiden Ladeluftkühler 3, 4 von oben her in das Gehäuseunterteil 14 eingesetzt werden, bevor der Luftverteilerdeckel 13 aufgeschraubt wird, der anschlie-βend die gesamte Oberseite des Gehäuses 5 überspannt und die Einführöffnungen an den Oberseiten der Ausnehmungen 15 verschließt.

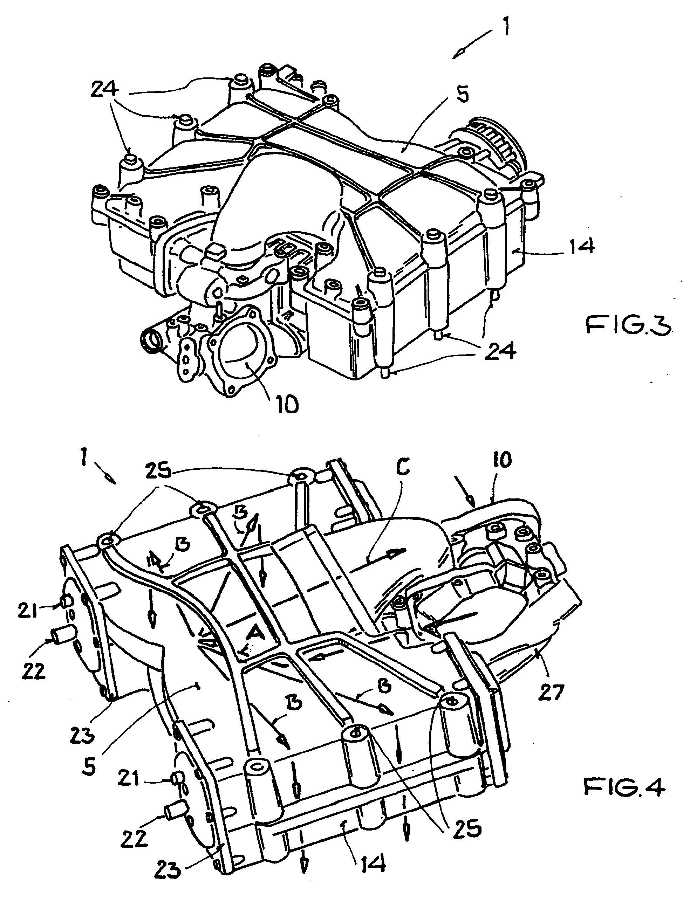

Bei dem in den Figuren 4 und 5 dargestellten Ladermodul 2 ist das ebenfalls im Sandgussverfahren aus Aluminium hergestellte Gehäuse 5 hingegen einteilig mit integralem Luftverteilerdeckel 13 ausgebildet und an seiner vorderen Stirnseite 9 mit zwei Einführöffnungen 16 versehen, durch die sich die Ladeluftkühler 3, 4 von vorne her in das Gehäuse 5 einschieben lassen.

Wie am besten in Fig. 5 dargestellt, weisen die beiden in Leichtbauweise aus Aluminium gefertigten Ladeluftkühler 3, 4 jeweils ein an die Form der Ausnehmungen 15 bzw. Einführöffnungen 16 angepasstes Kühlergehäuse 17 auf, das an seiner Ober- und Unterseite offen ist und einen im Querschnitt etwa rechteckigen vertikalen Luftkanal 18 umschließt. Der Luftkanal 18 erstreckt sich von einem durch den Luftverteiler 13 hindurch mit der Luftaustrittsöffnung 12 des Laders 2 kommunizierenden oberen Lufteinlass bis zu einem an der Unterseite des Kühlergehäuses 17 angeordneten Luftauslass, wo die gekühlte Ladeluft durch eine der Anzahl der Zylinder der Verbrennungskraftmaschine entsprechende Anzahl von Luftaustrittsöffnungen 19 in der Unterseite des Gehäuses 5 direkt in weiterführende Luftkanäle im Zylinderkopf gelangt. Die Kühlergehäuse 17 enthalten jeweils eine Mehrzahl von parallelen Kühlrippen 20, die in Längsrichtung der Ladeluftkühler 3, 4, d.h. parallel zur Verdichterwelle des Laders 2, zwischen gegenüberliegenden stirnseitigen Begrenzungswänden des Luftkanals 18 angeördnet sind und von Kühlwasser durchströmt werden. Das letztere wird durch einen an der vorderen Stimseite des Gehäuses 5 angeordneten Kühlwassereinlass 21 in die Kühlrippen 20 zugeführt und tritt durch einen daneben oder darunter angeordneten Kühlwasserauslass 22 wieder aus den Kühlem 3, 4 aus.

Während der Kühlwassereinlass 21 und der Kühlwasserauslass 22 bei dem Ladermodul 1 in den Figuren 1 bis 3 in das Gehäuse 5 integriert sind, bilden sie bei dem Ladermodul 1 in den Figuren 4 und 5 einen Teil eines die Einführöffnung 16 verschießenden und mit dem Gehäuse 5 verschraubten Verschlussdeckels 23 an den vorderen Stirnenden der Ladeluftkühler 3, 4.

Nach dem Zusammenbau wird das Ladermodul 1 an den beiden Zylinderköpfen der Verbrennungskraftmaschine montiert, wobei die Unterseite des Gehäuses 5 unterhalb der Ladeluftkühler 3, 4 gegen die Oberseiten von zwei auf den Zylinderköpfen der Verbrennungskraftmaschine sitzenden Klappenflanschen (CVTS-Flanschen) anliegt und die Luftaustrittsöffnungen 19 mit entsprechenden Lufteintrittsöffnungen in den Klappenflanschen fluchten. Die Befestigung des Ladermoduls erfolgt mit Hilfe von Befestigungsschrauben 24, die durch Durchgangsbohrungen 25 im Gehäuse 5 in Gewindebohrungen der Klappenflansche eingeschraubt werden.

Wie am besten in Fig. 4 mit einem unterbrochenen Pfeil C dargestellt, umschließt das Gehäuse 5 weiter einen unterhalb des Luftverteilerdeckels 13 angeordneten Bypass zur Teillastregelung, der sich zwischen dem Lader 2 und dem Luftverteilerdeckel 13 bis zur hinteren Stimseite 11 des Gehäuses 5 erstreckt, wo er bei Bedarf mit Hilfe einer verschwenkbaren Bypassklappe 26 (Fig. 5) in einem an das Gehäuse 5 angeflanschten Anbauteil 27 mit einem Luftansaugkanal zwischen der Lufteintrittsöffnung 11 und dem Laders 2 verbindbar ist, um einen Teil der Ladeluft im Kreislauf durch den Lader 2 zu führen.

### BEZUGSZEICHENLISTE

| | |
|---|---|
| 1 | Ladermodul |
| 2 | Lader |
| 3 | Ladeluftkühler |
| 4 | Ladeluftkühler |
| 5 | Gehäuse |
| 6 | Hohlraum |
| 7 | Antriebswelle |
| 8 | Verschlussdeckel |
| 9 | Stirnseite Gehäuse |
| 10 | Luftansaugöffnung |
| 11 | Stirnseite Gehäuse |
| 12 | Luftausstossöffnung |
| 13 | Luftverteilerdeckel |
| 14 | Gehäuseunterteil |
| 15 | Ausnehmungen |
| 16 | Einführöffnungen |
| 17 | Kühlergehäuse |
| 18 | Luftkanal |
| 19 | Luftaustrittsöffnungen |
| 20 | Kühlrippen |
| 21 | Kühlwassereinlass |
| 22 | Kühlwasserauslass |
| 23 | Verschlussdeckel |
| 24 | Befestigungsschrauben |
| 25 | Durchgangsbohrungen |
| 26 | Bypassklappe |
| 27 | Anbauteil |
| A, B, C | Luftströmungspfeile |

## Patentansprüche

1. Ladermodul für eine Verbrennungskraftmaschine, umfassend einen mechanischen Lader und zwei dem Laders nachgeschaltete Ladeluftkühler zur Kühlung der verdichteten Ladeluft, **dadurch gekennzeichnet, dass** der Lader (2) und die beiden Ladeluftkühler (3, 4) in ein gemeinsames Gehäuse (5) eingesetzt sind, das den Lader (2) und die beiden Ladeluftkühler (3, 4) mindestens an der Unterseite und an zwei entgegengesetzten Seiten umgibt.

2. Ladermodul nach Anspruch 1, **dadurch gekennzeichnet, dass** das Gehäuse (5) aus Leichtmetall hergestellt ist.

3. Ladermodul nach Anspruch 1 oder 2, **dadurch gekennzeichnet, dass** das Gehäuse (5) im Sandgussverfahren hergestellt ist.

4. Ladermodul nach einem der vorangehenden Ansprüche, **dadurch gekennzeichnet, dass** der Lader (2) in der Mitte zwischen den beiden Ladeluftkühlern (3, 4) angeordnet ist.

5. Ladermodul nach einem der vorangehenden Ansprüche, **dadurch gekennzeichnet, dass** das Gehäuse (5) weiter einen zwischen dem Lader (2) und den Ladeluftkühlern (3, 4) angeordneten Luftverteiler (13) umschließt.

6. Ladermodul nach Anspruch 5, **dadurch gekennzeichnet, dass** der Luftverteiler (13) oberhalb des Laders (2) und der beiden Ladeluftkühler (3, 4) angeordnet ist.

7. Ladermodul nach einem der vorangehenden Ansprüche, **dadurch gekennzeichnet, dass** das Gehäuse (5) weiter einen Bypass (25) zur Teillastreglung umschließt.

8. Ladermodul nach Anspruch 7, **dadurch gekennzeichnet, dass** der Bypass (25) oberhalb des Laders (2) angeordnet ist.

9. Ladermodul nach einem der vorangehenden Ansprüche, **dadurch gekennzeichnet, dass** das Gehäuse (5) an einer seiner Stirnseiten (9) mit einer Öffnung zum Einführen des Laders (2) versehen ist.

10. Ladermodul nach einem der vorangehenden Ansprüche, **dadurch gekennzeichnet, dass** das Gehäuse (5) an einer seiner Stirnseiten mit einer Lufteinlassöffnung (11) versehen ist.

11. Ladermodul nach Anspruch 9 und 10, **dadurch gekennzeichnet, dass** die Lufteinlassöffnung und die Öffnung zum Einführen des Laders (2) an entgegengesetzten Stirnseiten des Gehäuses (5) angeordnet sind.

12. Ladermodul nach einem der vorangehenden Ansprüche, **dadurch gekennzeichnet, dass** das Gehäuse (5) an seiner Unterseite eine Mehrzahl von Luftaustrittsöffnungen (19) aufweist.

13. Ladermodul nach Anspruch 12, **dadurch gekennzeichnet, dass** die Luftaustrittsöffnungen (19) unterhalb der beiden Ladeluftkühler (3, 4) angeordnet sind.

14. Ladermodul nach einem der vorangehenden Ansprüche, **dadurch gekennzeichnet, dass** die Ladeluftkühler (3, 4) parallel zu den Längsseiten des Gehäuses (5) von Kühlwasser und im Querstrom von oben nach unten von Ladeluft durchströmt werden.

15. Ladermodul nach einem der vorangehenden Ansprüche, **dadurch gekennzeichnet, dass** die Ladeluftkühler (3, 4) oder das Gehäuse (5) an einer Stirnseite (9) mit Anschlüssen zur Zufuhr und Abfuhr von Kühlwasser versehen sind.

16. Ladermodul nach einem der vorangehenden Ansprüche, **dadurch gekennzeichnet, dass** das Gehäuse (5) an seiner Oberseite durch einen Luftverteilerdeckel (13) verschlossen ist.

17. Ladermodul nach Anspruch 16, **dadurch gekennzeichnet, dass** der Luftverteilerdeckel (13) als Einheit mit einem Boden und Seitenwänden des Gehäuses (5) ausgebildet ist.

18. Ladermodul nach Anspruch 16 oder 17, **dadurch gekennzeichnet, dass** das Gehäuse (5) an einer seiner Stirnseiten (9) mit Öffnungen (16) zum Einführen der beiden Ladeluftkühler (3, 4) versehen ist.

19. Ladermodul nach Anspruch 16, **dadurch gekennzeichnet, dass** der Luftverteilerdeckel (13) als Schraubdeckel ausgebildet Ist und mindestens eine Öffnung zum Einsetzen der Ladeluftkühler (3, 4) verschließt.

20. Ladermodul nach einem der vorangehenden Ansprüche, **dadurch gekennzeichnet, dass** die Ladeluftkühler (3, 4) in Leichtbauweise aus Metallblech hergestellt sind.

21. Verbrennungskraftmaschine mit einem Motorblock, zwei Reihen von V-förmig im Motorblock angeordneten Zylindern und zwei oberhalb der Zylinderreihen am Motorblock befestigten Zylinderköpfen, **gekennzeichnet durch** ein Ladermodul (1) nach einem der vorangehenden Ansprüche.

22. Verbrennungskraftmaschine nach Anspruch 21, **dadurch gekennzeichnet, dass** sich das Gehäuse (5) unterhalb der beiden Ladeluftkühler (3, 4) mit seiner Unterseite auf den Zylinderköpfen abstützt.

23. Verbrennungskraftmaschine nach Anspruch 21 oder 22, **dadurch gekennzeichnet, dass** das Gehäuse (5) an den Zylinderköpfen festgeschraubt ist.

24. Verbrennungskraftmaschine nach einem der Ansprüche 21 bis 23, **dadurch gekennzeichnet, dass** das Ladermodul (1) einen Zwischenraum zwischen den beiden Zylinderköpfen überbrückt.

25. Verbrennungskraftmaschine nach einem der Ansprüche 21 bis 24, **dadurch gekennzeichnet, dass** der Lader (2) über einen Riementrieb mit der Kurbelwelle der Verbrennungskraftmaschine verbunden ist.

## Claims

1. Supercharger module for an internal combustion engine, comprising a mechanical supercharger and two charge-air coolers, which are positioned downstream of the supercharger, for cooling the compressed charge air, **characterized in that** the supercharger (2) and the two charge-air coolers (3, 4) are inserted into a common housing (5) which encloses the supercharger (2) and the two charge-air coolers (3, 4) at least at the underside and at two opposite sides.

2. Supercharger module according to Claim 1, **characterized in that** the housing (5) is manufactured from light metal.

3. Supercharger module according to Claim 1 or 2, **characterized in that** the housing (5) is manufactured in a sand casting process.

4. Supercharger module according to one of the preceding claims, **characterized in that** the supercharger (2) is arranged in the middle between the two charge-air coolers (3, 4).

5. Supercharger module according to one of the preceding claims, **characterized in that** the housing (5) also encloses an air distributor (13) which is arranged between the supercharger (2) and the charge-air coolers (3, 4) .

6. Supercharger module according to Claim 5, **characterized in that** the air distributor (13) is arranged above the supercharger (2) and the two charge-air coolers (3, 4).

7. Supercharger module according to one of the preceding claims, **characterized in that** the housing (5) also encloses a bypass (25) for part-load regulation.

8. Supercharger module according to Claim 7, **characterized in that** the bypass (25) is arranged above the supercharger (2).

9. Supercharger module according to one of the preceding claims, **characterized in that** the housing (5) is provided, on one of its end sides (9), with an opening for inserting the supercharger (2).

10. Supercharger module according to one of the preceding claims, **characterized in that** the housing (5) is provided, on one of its end sides, with an air inlet opening (11).

11. Supercharger module according to Claim 9 and 10, **characterized in that** the air inlet opening and the opening for inserting the supercharger (2) are arranged on opposite end sides of the housing (5).

12. Supercharger module according to one of the preceding claims, **characterized in that** the housing (5) has, on its underside, a multiplicity of air outlet openings (19).

13. Supercharger module according to Claim 12, **characterized in that** the air outlet openings (19) are arranged below the two charge-air coolers (3, 4).

14. Supercharger module according to one of the preceding claims, **characterized in that** cooling water flows through the charge-air coolers (3, 4) parallel to the longitudinal sides of the housing (5), and charge air flows through the charge-air coolers (3, 4) in a transverse flow from top to bottom.

15. Supercharger module according to one of the preceding claims, **characterized in that** the charge-air coolers (3, 4) or the housing (5) are provided, on an end side (9), with ports for the supply and discharge of cooling water.

16. Supercharger module according to one of the preceding claims, **characterized in that** the housing (5) is closed off on its top side by an air distributor cover (13).

17. Supercharger module according to Claim 16, **characterized in that** the air distributor cover (13) is formed as a unit with a base and side walls of the housing (5).

18. Supercharger module according to Claim 16 or 17, **characterized in that** the housing (5) is provided, on one of its end sides (9), with openings (16) for inserting the two charge-air coolers (3, 4).

19. Supercharger module according to Claim 16, **characterized in that** the air distributor cover (13) is designed as a screw-on cover and closes off at least one opening for inserting the charge-air coolers (3, 4) .

20. Supercharger module according to one of the preceding claims, **characterized in that** the charge-air coolers (3, 4) are manufactured, in a lightweight construction, from sheet metal.

21. Internal combustion engine having an engine block, having two rows of cylinders arranged in the engine block in a V-shaped configuration, and having two cylinder heads which are fastened to the engine block above the rows of cylinders, **characterized by** a supercharger module (1) according to one of the preceding claims.

22. Internal combustion engine according to Claim 21, **characterized in that** the housing (5) is supported, below the two charge-air coolers (3, 4), with its underside on the cylinder heads.

23. Internal combustion engine according to Claim 21 or 22, **characterized in that** the housing (5) is fixedly screwed to the cylinder heads.

24. Internal combustion engine according to one of Claims 21 to 23, **characterized in that** the supercharger module (1) bridges an intermediate space between the two cylinder heads.

25. Internal combustion engine according to one of Claims 21 to 24, **characterized in that** the supercharger (2) is connected via a belt drive to the crankshaft of the internal combustion engine.

## Revendications

1. Module de charge pour un moteur à combustion interne, comprenant un chargeur mécanique et deux éléments de refroidissement d'air de charge connectés en aval du chargeur pour le refroidissement de l'air de charge condensé, **caractérisé en ce que** le chargeur (2) et les deux éléments de refroidissement d'air de charge (3, 4) sont placés dans un boîtier (5) commun entourant le chargeur (2) et les deux éléments de refroidissement d'air de charge (3, 4), au moins au niveau du côté inférieur et des deux côtés opposés.

2. Module de charge selon la revendication 1, **caractérisé en ce que** le boîtier (5) est fabriqué en métal léger.

3. Module de charge selon la revendication 1 ou 2, **caractérisé en ce que** le boîtier (5) est fabriqué selon un procédé de fonte au sable.

4. Module de charge selon l'une quelconque des revendications précédentes, **caractérisé en ce que** le chargeur (2) est disposé de façon centrale entre les deux éléments de refroidissement d'air de charge (3, 4) .

5. Module de charge selon l'une quelconque des revendications précédentes, **caractérisé en ce que** le boîtier (5) englobe en outre un répartiteur d'air (13) disposé entre le chargeur (2) et les éléments de refroidissement d'air de charge (3, 4).

6. Module de charge selon la revendication 5, **caractérisé en ce que** le répartiteur d'air (13) est disposé au-dessus du chargeur (2) et des deux éléments de refroidissement d'air de charge (3, 4).

7. Module de charge selon l'une quelconque des revendications précédentes, **caractérisé en ce que** le boîtier (5) englobe en outre un élément de contournement (25) permettant de réguler en partie la charge.

8. Module de charge selon la revendication 7, **caractérisé en ce que** l'élément de contournement (25) est disposé au-dessus du chargeur (2).

9. Module de charge selon l'une quelconque des revendications précédentes, **caractérisé en ce que** le boîtier (5) est pourvu, au niveau d'un de ses côtés avant (9), d'une ouverture prévue pour l'introduction du chargeur (2).

10. Module de charge selon l'une quelconque des revendications précédentes, **caractérisé en ce que** le boîtier (5) est pourvu, au niveau d'un de ses côtés avant, d'une ouverture d'admission d'air (11).

11. Module de charge selon la revendication 9 et 10, **caractérisé en ce que** l'ouverture d'admission d'air et l'ouverture d'introduction du chargeur (2) sont disposées au niveau des côtés avant opposés du boîtier (5).

12. Module de charge selon l'une quelconque des revendications précédentes, **caractérisé en ce que** le boîtier (5) présente, au niveau de son côté inférieur, une pluralité d'ouvertures de sortie d'air (19).

13. Module de charge selon la revendication 12, **caractérisé en ce que** les ouvertures de sortie d'air (19) sont disposées en dessous des deux éléments de refroidissement d'air de charge (3, 4).

14. Module de charge selon l'une quelconque des revendications précédentes, **caractérisé en ce que** les éléments de refroidissement d'air de charge (3, 4) sont traversés parallèlement aux côtés longitudinaux du boîtier (5) par de l'eau de refroidissement et selon un flux transversal allant du haut vers le bas par de l'air de charge.

15. Module de charge selon l'une quelconque des revendications précédentes, **caractérisé en ce que** les éléments de refroidissement d'air de charge (3, 4) ou le boîtier (5) sont pourvus, au niveau d'un côté avant (9), de raccords prévus pour l'adduction et l'abduction d'eau de refroidissement.

16. Module de charge selon l'une quelconque des revendications précédentes, **caractérisé en ce que** le boîtier (5) est fermé, au niveau de son côté supérieur, par un cache de répartiteur d'air (13).

17. Module de charge selon la revendication 16, **caractérisé en ce que** le cache de répartiteur d'air (13) prend la forme d'une unité dotée d'un fond et des parois latérales du boîtier (5).

18. Module de charge selon la revendication 16 ou 17, **caractérisé en ce que** le boîtier (5) est pourvu, au niveau d'un de ses côtés avant (9), d'ouvertures (16) conçues pour permettre l'introduction des deux éléments de refroidissement d'air de charge (3, 4).

19. Module de charge selon la revendication 16, **caractérisé en ce que** le cache de répartiteur d'air (13) prend la forme d'un cache vissé et obstrue au moins une ouverture d'insertion des éléments de refroidissement d'air de charge (3, 4).

20. Module de charge selon l'une quelconque des revendications précédentes, **caractérisé en ce que** les éléments de refroidissement d'air de charge (3, 4) sont fabriqués en tôle métallique dans leur structure légère.

21. Moteur à combustion interne équipé d'un bloc moteur, de deux rangées de cylindres disposées en forme de V dans le bloc moteur et de deux culasses fixées au bloc moteur au-dessus des rangées de cylindres, **caractérisé par** la présence d'un module de charge (1) selon l'une quelconque des revendications précédentes.

22. Moteur à combustion interne selon la revendication 21, **caractérisé en ce que** le boîtier (5) s'appuie, en dessous des deux éléments de refroidissement d'air de charge (3, 4), sur les culasses avec son côté inférieur.

23. Moteur à combustion interne selon la revendication 21 ou 22, **caractérisé en ce que** le boîtier (5) est vissé fixement aux culasses.

24. Moteur à combustion interne selon l'une quelconque des revendications 21 à 23, **caractérisé en ce que** le module de charge (1) enjambe un espace intermédiaire prévu entre les deux culasses.

25. Moteur à combustion interne selon l'une quelconque des revendications 21 à 24, **caractérisé en ce que** le chargeur (2) est relié à l'arbre de vilebrequin du moteur à combustion interne par le biais d'une courroie d'entraînement.
